# EUROPEAN PATENT SPECIFICATION

(11) **EP 2 700 796 B1**
(45) Date of publication and mention of the grant of the patent: **10.08.2016**
(21) Application number: 12181393.5
(22) Date of filing: 22.08.2012
(51) Int. Cl.: F02B 19/18, F02B 19/12

(54) **Pre-combustion chamber of an internal combustion engine and method of operating the same**
Vorbrennkammer für einen Verbrennungsmotor und Betriebsverfahren dafür
Chambre de précombustion d'un moteur à combustion interne et son procédé de fonctionnement

(43) Date of publication of application: 26.02.2014
(73) Proprietor: Caterpillar Motoren GmbH & Co. KG, 24159 Kiel (DE)
(72) Inventor: Sixel, Eike Joachim, 24109 Kiel (DE); Wester, Daniel, 24242 Felde (DE); Mooser, Dirk, 24223 Raisdorf (DE)
(74) Representative: Kramer Barske Schmidtchen Patentanwälte PartG mbB

(56) References cited:
- WO-A1-91/12418
- DE-A1- 4 001 142
- US-A1- 2003 213 461
- US-A1- 2008 168 963
- US-A1- 2010 326 400
- US-B2- 7 438 043

## Description

### Technical Field

The present disclosure generally relates to a pre-combustion chamber tip of a pre-combustion chamber assembly for an internal combustion engine. More specifically, the present disclosure relates to a pre-combustion chamber tip of a gaseous fuel internal combustion engine, wherein the pre-combustion chamber tip includes a first group of orifices and a second group of orifices.

### Background

It is known to use a pre-combustion chamber in some internal combustion engine applications, such as gaseous fuel applications. Typically, a pre-combustion chamber is a relatively small gas accumulating chamber located in the engine cylinder head. The pre-combustion chamber is in fluid communication with the main combustion chamber of the engine via a number of small orifices. During operation, a spark plug ignites gaseous fuel within the pre-combustion chamber (as opposed to igniting the gaseous fuel in the main combustion chamber). Ignition of the gaseous fuel in the pre-combustion chamber creates a front of burning fuel which is jetted or otherwise advanced through the orifices and into the main combustion chamber thereby igniting the mixture of gaseous fuel and air therein.

The temperature in the pre-combustion chamber is extremely hot, which is detrimental to the life of the spark plug and the pre-combustion chamber tip. To reduce temperatures of some of the pre-combustion chamber components, it is known to utilize, for example a cooled pre-combustion chamber assembly.

In the course of future emission regulations, power output requirements and performance of internal combustion engines comprising a pre-combustion chamber tip, the pre-combustion chamber may be downsized. However, at the same time, the effective cross-section of the orifices fluidly connecting the pre-combustion chamber to the main combustion chamber may be maintained to ensure a stable and smooth transition of the burning fuel and to keep the velocity of the burning fuel in an appropriate velocity range.

US 7 438 043 B2 discloses an internal combustion engine with an auxiliary combustion chamber having a first and a second group of jet apertures fluidly connecting the auxiliary combustion chamber to a main combustion chamber. The first group of jet apertures and the second group of jet apertures are arranged such that an adjacent pair of jet apertures is offset in the circumferential direction by a predetermined interval. The two groups of jet apertures are provided in a parallel manner.

JP 2007/040174 A discloses an indirect injection combustion engine comprising an auxiliary combustion chamber. The auxiliary combustion chamber comprises one or more first injection holes opening at a different angle in relation to a cylinder shaft, and one or more second injection holes directed to a piston crown surface.

US 2010/0326400 A1 discloses a combustion system provided with a pre-chamber adapted to cooperate with a piston in a manner that produces a highly efficient combustion process. The pre-chamber includes a plurality of orifices having inlets disposed at the same axial position and outlets disposed at different axial positions.

WO 91/12418 A1 discloses a fuel combustion system for a lean-burn internal combustion engine including a pre-combustion chamber assembly defining a pre-chamber having a preselected shape and volume and including a plurality of injection passages.

The present disclosure is directed, at least in part, to improving or overcoming one or more aspects of prior systems.

### Summary of the Disclosure

According to an aspect of the present disclosure, a pre-combustion chamber tip of a pre-combustion chamber assembly of an internal combustion engine may comprise a dome-like shaped wall structure forming at least a portion of a pre-combustion chamber and having a center axis, and a plurality of orifices extending through the wall structure. The plurality of orifices may comprise inlets arranged at the inside of the wall structure and outlets arranged at the outside of the wall structure. Central regions of the outlets of the plurality of orifices are distributed azimuthically with respect to the center axis and arranged at a first axial position with respect to the center axis within an outlet band extending circumferentially around the dome-like shaped wall structure. The plurality of orifices may comprise a first group of orifices extending at a first angle with respect to the center axis and a second group of orifices extending at a second angle with respect to the center axis, wherein the first angle may be different to the second angle.

According to another aspect of the present disclosure, a pre-combustion chamber lower part for attaching to a pre-combustion chamber upper part of an internal combustion engine may comprise a spark plug mounting section for mounting at least one spark plug, and a pre-combustion chamber tip according to the present disclosure attached to the spark plug mounting section.

According to another aspect of the present disclosure, an internal combustion engine may comprise a main combustion chamber, a cylinder head configured to form at least a portion of the main combustion chamber, and a pre-combustion chamber assembly for attaching to the cylinder head. The pre-combustion chamber assembly may comprise a pre-combustion chamber upper part and a pre-combustion chamber lower part according to the present disclosure. The pre-combustion chamber tip may at least partially extend into the main combustion chamber and the pre-combustion chamber may be in fluid communication with the main combustion chamber via the plurality of orifices.

According to another aspect of the present disclosure, a method for operating a pre-combustion chamber tip according to the present disclosure may comprise supplying a mixture of fuel and air to the pre-combustion chamber, igniting the fuel within the pre-combustion chamber, and emitting the ignited fuel into the main combustion chamber via the first and second groups of orifices.

In some embodiments, the outlet band may have a first width, the outlets of the first group of orifices may have a second width, and the outlets of the second group of orifices may have a third width, wherein the first width may be equal to the larger width of the second width and the third width.

In some embodiments, central regions of the outlets of the plurality of orifices may be distributed azimuthically with respect to the center axis. In yet some embodiments, the outlets of the first and second groups of orifices alternate each other on the outlet band.

In some embodiments, at least one orifice of the plurality of orifices may have a step-like shaped cross-section along the thickness of the wall structure, wherein the diameter of the inlet may be smaller than the diameter of the outlet.

In some embodiments, the dome-like shaped wall structure may comprise a first portion and a second portion connected to the first portion by a connecting portion. The first portion may be cylindrical and the second portion may be a generally cylindrical spherical dome closing the pre-combustion chamber tip at the second portion, wherein the outlet band may be circumferentially arranged at the connecting portion.

In some embodiments, the internal combustion engine may be a gaseous fuel internal combustion engine running on gaseous fuel, such as, for example, natural gas.

Other features and aspects of this disclosure will be apparent from the following description and the accompanying drawings.

### Brief Description of the Drawings

Fig. 1 is a diagrammatic cross-sectional view of an embodiment of an internal combustion engine with a pre-combustion chamber assembly of the present disclosure shown installed in a cylinder head of the engine.
Fig. 2 is a diagrammatic cross-sectional view of the pre-combustion chamber assembly of Fig. 1 shown in greater detail.
Fig. 3 is a diagrammatic, partial cut view of a pre-combustion chamber lower part of the pre-combustion chamber assembly of Fig. 2.
Fig. 4 is a cross-sectional view of a pre-combustion chamber of the pre-combustion chamber lower part taken along line A - A of Fig. 3.
Fig. 5 is a cross-sectional view taken along line B - B of Fig. 4 through a first group of orifices.
Fig. 6 is a cross-sectional view taken along line C - C of Fig. 4 through a second group of orifices.
Fig. 7 is a cross sectional view illustrating another exemplary embodiment of the plurality of orifices.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure may be based in part on the realization that arranging a plurality of orifices of a pre-combustion chamber tip of an internal combustion engine with different inclinations with respect to a centerl axis of the pre-combustion chamber tip may efficiently utilize the limited space for arranging the plurality of orifices within the pre-combustion chamber tip and may still ensure a stable transition of the burning fuel into a main combustion chamber of the internal combustion engine.

The present disclosure may be further based in part on the realization that arranging the plurality of orifices of the pre-combustion chamber tip such that the outlets of the plurality of orifices are arranged at a same axial position may lead to a low penetration of the pre-combustion chamber tip into the main combustion chamber, while the performance and power output of the engine may be maintained. Furthermore, the torches of the burning fuel may be in a single plane.

The present disclosure may be further based in part on the realization that arranging inlets of a first group of orifices at least partially interlocking with inlets of a second group of orifices of a pre-combustion chamber tip may lead to a sufficient wall thickness between the first and second group of orifices for having sufficient cooling of the pre-combustion chamber tip, especially of the plurality of orifices.

The present disclosure may be further based in part on the realization that providing at least one orifice of the plurality of orifices with a tapered cross-section may support in enlarging the effective cross-section of the burning fuel flow flowing from the pre-combustion chamber into the main combustion chamber via the plurality of orifices. In particular, after passing the inlet of at least one orifice, the burning fuel flow may disengage from an edge formed between the pre-combustion chamber and the inlet. Due to the at least one tapered orifice, the effective cross-section of the burning fuel flow may be enlarged which may result in less velocities of the burning fuel flow and, therefore, in less mechanical and thermal stress to the pre-combustion chamber tip.

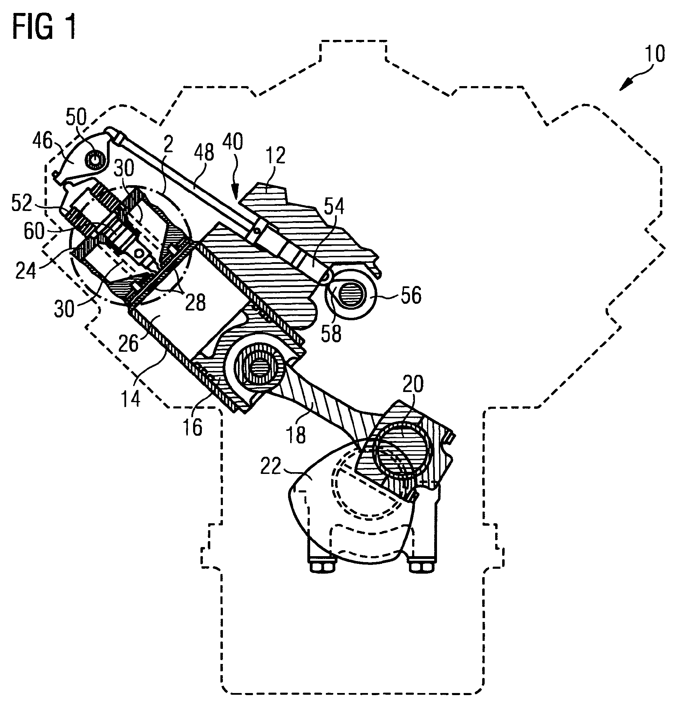

Referring now to the drawings, an exemplary embodiment of an internal combustion engine 10 is illustrated in Fig. 1. The internal combustion engine 10 may include features not shown, such as fuel systems, air systems, cooling systems, peripheries, drivetrain components, turbochargers, etc. For the purposes of the present disclosure, the internal combustion engine 10 is considered a four-stroke gaseous fuel internal combustion engine. One skilled in the art will recognize, however, that the gaseous fuel internal combustion engine 10 may be any type of engine (turbine, gas, diesel, natural gas, propane, etc.) that would utilize a pre-combustion chamber. Furthermore, the internal combustion engine 10 may be of any size, with any number of cylinders, and in any configuration ("V," in-line, radial, etc.). The internal combustion engine 10 may be used to power any machine or other device, including locomotive applications, on-highway trucks or vehicles, off-highway trucks or machines, earth moving equipment, generators, aerospace applications, marine applications, pumps, stationary equipment, or other engine powered applications.

The internal combustion engine 10 may include an engine block 12 having a plurality of cylinders 14 (one of which is illustrated in Fig. 1). A piston 16 may be slidably disposed within the cylinder 14 to reciprocate between a top-dead-center position and a bottom-dead-center position. A connecting rod 18 may connect the piston 16 to an eccentric crankpin 20 of a crankshaft 22 such that reciprocating motion of the piston may result in rotation of the crankshaft 22.

The internal combustion engine 10 may also include a cylinder head 24 engaged with the engine block 12 to cover the cylinder 14, thereby defining a main combustion chamber 26. The cylinder head 24 may define intake and exhaust openings 28 that may allow intake gases into the main combustion chamber 26 and exhaust gases out of the main combustion chamber 26, respectively. Engine valves 30 may be positioned to selectively open and close the openings 28. Each cylinder 14 may include multiple intake and exhaust openings 28.

The internal combustion engine 10 may include a series of valve actuation assemblies 40 (one of which is illustrated in Fig. 1). The multiple valve actuation assemblies 40 may be provided per cylinder 14. For example, one valve actuation assembly may be used to open and close the intake valves and another valve actuation assembly may be provided to open and close the exhaust valves.

The valve actuation assembly 40 may include a rocker arm 46. The rocker arm 46 may be pivotally mounted in the cylinder head 24 and may attach to the engine valves 30 at one end and may attach to a push rod 48 at the other end. Oscillation of rocker arm 46 about its pivot point 50 may cause the valves 30 to move between an open position and a closed position. The valve actuation assembly 40 may also include valve springs 52 that may bias the valves 30 toward the closed position (i.e. closing the intake and exhaust openings 28).

The other end of the push rod 48 may engage a lifter 54 which may engage a camshaft 56. The camshaft 56 may operatively engage the crankshaft 22. The camshaft 56 may be connected with crankshaft 22 in any manner readily apparent to one skilled in the art where rotation of the crankshaft 22 may result in rotation of the camshaft 56. For example, camshaft 56 may be connected to crankshaft 22 through a gear train (not shown).

As shown in Fig. 1, a first cam lobe 58 may be disposed on the camshaft 56 to engage the lifter 54. One skilled in the art may recognize that the camshaft 56 may include additional cam lobes to engage with other lifters in order to actuate additional engine valves.

The internal combustion engine 10 may also include a pre-combustion chamber assembly 60, which is positioned within the cylinder head 24 between the valves 30. The pre-combustion chamber assembly 60 may be configured in a variety of ways. Any assembly capable of being positioned in the cylinder head 24 to support a combustion event outside of the main combustion chamber 26, and direct the combustion into the main combustion chamber 26 may be used.

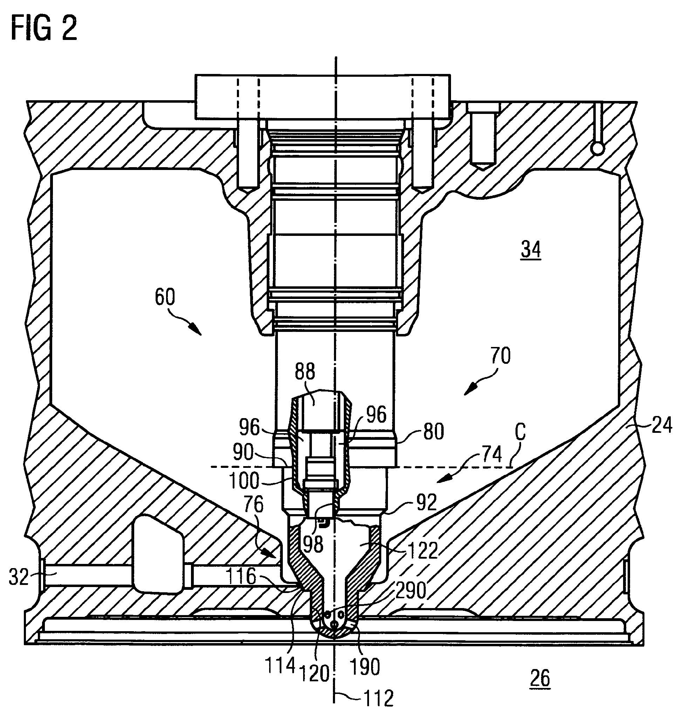

With reference to Fig. 2, the pre-combustion chamber assembly 60 is shown in greater detail. The pre-combustion chamber assembly 60 may extend from the cylinder head 24 into the main combustion chamber 26. In the depicted embodiment, the pre-combustion chamber assembly 60 may comprise a pre-combustion chamber upper part 70 and a pre-combustion chamber lower part 74 being attached to the pre-combustion chamber upper part 70. In Fig. 2, a separation between the pre-combustion chamber upper part 70 and the pre-combustion chamber lower part 74 may be illustrated by a dotted Line C.

The pre-combustion chamber upper part 70 may be attached to the cylinder head 24 via, for example, a thread. The pre-combustion chamber upper part 70 may be generally cylindrical and may be made from any suitable material. For example, the pre-combustion chamber upper part 70 may be made of a ductile iron casting - pearlitic ferritic.

The pre-combustion chamber upper part 70 may be configured to accommodate a spark plug 88 therein such that a sparking end of the spark plug 88 may extend out of the pre-combustion chamber upper part 70. The spark plug 88 in the context of this invention may mean any suitable ignition device available in the art.

The pre-combustion chamber lower part 74 may be generally cylindrical and may be connectable to the pre-combustion chamber upper part 70 by any suitable means, such as a brazing or welding, for example. Preferably, the pre-combustion chamber lower part 74 may be removable connected to the pre-combustion chamber upper part 70 via, for instance, a thread. For example, the pre-combustion chamber lower part 74 may be screwed into the pre-combustion chamber upper part 70, as indicated by a thread 90. This may allow replacing the pre-combustion chamber lower part 74 by a new pre-combustion chamber lower part in the case of wear of the pre-combustion chamber lower part 74, especially in the case of wear of a pre-combustion chamber tip 76 (which may be described in greater detail below). For instance, after a usage time of, for example, about 15.000 hours of operation, the pre-combustion chamber lower part 74 may be replaced. The pre-combustion chamber lower part 74 may be preferably cast to the general configuration and subsequently machined to final dimensions where required.

It should be noted that the thread 90 may be provided for supporting in assembling the pre-combustion chamber upper part 70 and the pre-combustion chamber lower part 74 to form the pre-combustion chamber assembly 60. The connection between the pre-combustion chamber upper part 70 and the pre-combustion chamber lower part 74 may be sealed by screwing the pre-combustion chamber upper part 70 into the cylinder head 24, thereby pressing the pre-combustion chamber lower part 74 against a flange 114 (which may be described in greater detail below).

The pre-combustion chamber lower part 74 may have a stepped bore 96 that may extend through the pre-combustion chamber lower part 74. The stepped bore 96 may be adapted to receive the spark plug 88 extending from the pre-combustion chamber upper part 74. The stepped bore 96 may have a spark plug mounting bore 98 adapted to receive the end of the spark plug 88. The spark plug mounting bore 98 may be threads adapted to mate with threads on the end of the spark plug 88. The stepped bore 96 may define a sealing surface 100 that may be adapted to sealing engage the spark plug 88.

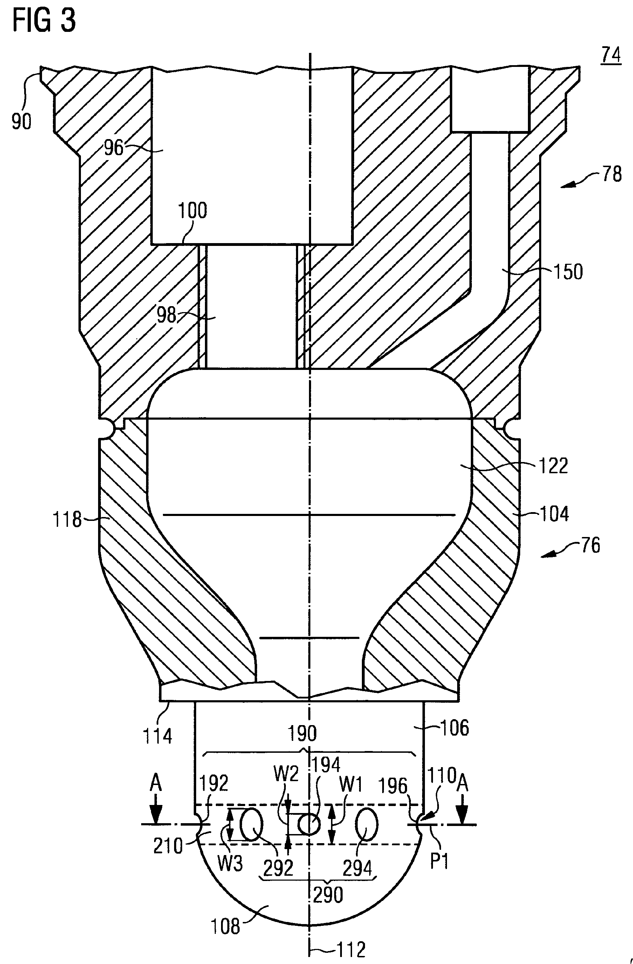

Referring to Fig. 3, a detailed partial cut view of the pre-combustion chamber lower part 74 is illustrated. The pre-combustion chamber lower part 74 may comprise a pre-combustion chamber tip 76 and a spark plug mounting section 78. The pre-combustion chamber tip 76 may be generally cylindrical and may be connectable to the spark plug mounting section 78 by any suitable means, such as a brazing or welding. For example, a controlled depth penetration weld, such as, a laser or electron beam weld may be used to connect the pre-combustion chamber tip 76 to the spark plug mounting section 78.

For example, the spark plug mounting section 78 may be made of a stainless steel material capable of withstanding relatively high temperatures, such as wrought stainless steel alloy, Type 347.

The pre-combustion chamber tip 76 may comprise a dome-like shaped wall structure 118 having a base portion 104, a first portion 106 connected to the base portion 104, a second portion 108, and a connecting portion 110. The first portion 106 may be connected to the second portion 108 by the connecting portion 110. The base portion 104 may be a substantially cylindrical portion, the first portion 106 may also be cylindrical and the second portion 108 may be a generally cylindrical spherical dome configured to close the wall structure 118 at the second portion 108 facing towards the main combustion chamber 26. The second portion 108, the connecting portion 110 and at least a part of the first portion 106 may extend into the main combustion chamber 26 (see, for example, Fig. 2). The base portion 104, the first portion 106, the second portion 108 and the connecting portion 110 may be disposed about a center axis 112 of the pre-combustion chamber tip 76.

A sealing surface 114 may be disposed about the pre-combustion chamber tip 76 at a predetermined location axially along the connecting portion 110. The sealing surface 114 may extend transversely relative to the central axis 112 and may be provided to seal against a sealing surface 116 provided in the cylinder head 24 to prevent leakage between the main combustion chamber 26 and first and second cooling fluid passages 32, 34 (see Fig. 2).

The sealing surface 114 may engage the sealing surface 116 located adjacent a bore 120 disposed in the cylinder head 24. The bore 120 may open into the main combustion chamber 26 and may receive the pre-combustion chamber tip 76. The bore 120 may enable the second portion 108 to extend into and be exposed to the main combustion chamber 26.

The wall structure 118 may have a pre-combustion chamber 122 disposed therein. The pre-combustion chamber 122 may open at the first portion 106 of the pre-combustion chamber tip 76 to receive the electrode end of the spark plug 88. Thus, the spark plug mounting section 78 may form at least a portion of the pre-combustion chamber 122.

The pre-combustion chamber tip 76 may include a plurality of spaced apart, radially oriented orifices 190 and 290 disposed at the connecting portion 110. The plurality of orifices 190, 290 may extend through the wall structure 118 and may comprise inlets at the inside of the wall structure 118 and outlets at the outside of the wall structure 118. The plurality of orifices 190, 290 may fluidly interconnect the pre-combustion chamber 122 and the main combustion chamber 26. The plurality of orifices 190 and 290 may be configured to direct the burning fuel, for example, expanding gases from the pre-combustion chamber 122 in a predetermined pattern into the main combustion chamber 26.

The pre-combustion chamber tip 76 may be made from a high temperature material. For example, a high temperature, thermally stable and environmentally resistant alloy, such as, a nickel-chromium-tungsten-molybdenum alloy may be suitable. It may be understood that other high temperature materials of suitable composition may be substituted without departing from the invention. The pre-combustion chamber tip 76 may be cast or machined from bar stock.

As further shown in Fig. 3, the spark plug mounting section 78 may further comprise a fuel supply connection 150 fluidly connected to the pre-combustion chamber 122 and to the fuel system (not shown in the drawings). The fuel supply connection 150 may be configured to receive, for example, a mixture of gaseous fuel and supply the mixture of gaseous fuel and air to the pre-combustion chamber 122. The fuel supply connection 150 may be further configured to accommodate a control valve (not explicitly shown in Fig. 3) for controlling the fuel supply into the pre-combustion chamber 122.

The pre-combustion chamber tip 76 may comprise an outlet band 210 disposed at a first axial position P1. Regarding Fig. 3, the outlet band 210 is depicted by two dashed, horizontal lines. Preferably, the outlet band 210 may be disposed at the connecting portion 110 of the pre-combustion chamber tip 76. The outlet band 210 may be a circular portion extending around the entire circumference of the dome-like shaped wall structure 118 and may comprise a first width W1. The outlet band 210 may be a portion where the outlets of the plurality of orifices 190, 290 may be disposed.

As further shown in Fig. 3, central regions of the outlets of the plurality of orifices 190 and 290 may be distributed azimuthically with respect to the center axis 112.

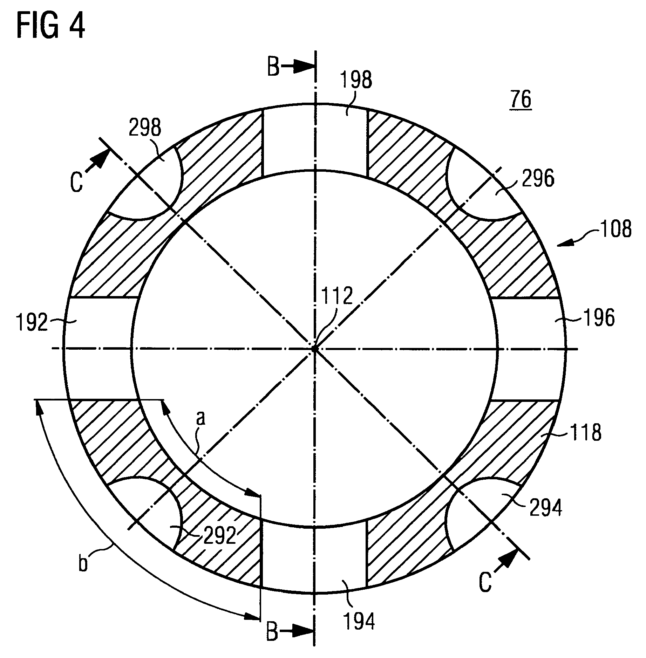

The orifices 190, 290 may comprise a first group of orifices 190 and a second group of orifices 290.The first group of orifices 190 may comprise, for example, four orifices 192, 194, 196, and 198 (see also Fig. 4). The second group of orifices 290 may also comprise, for example, four orifices 292, 294, 296, and 298 (see also Fig. 4). In some embodiments, the first group of orifices 190 and the second group of orifices 290 may comprise more or less than four orifices, respectively.

Although the plurality of orifices 190 and 290 may have a cylindrical shape, the outlets of the first group of orifices 190, as illustrated in Fig. 3, may have a different cross-section as the outlets of the second group of orifices 290. This may result from different inclinations of the first and second group of orifices 190 and 290, which may be described in greater detail below.

The outlets of the first group of orifices 190 may have a second width W2. The outlets of the second group of orifices 290 may have a third width W3 being larger than the second width W2. However, in some embodiments, the third width W3 may be equal to the second width W2. The first width W1 of the outlet band 210 may be equal to the third width W3, as depicted in Fig. 3. In some embodiments, the first width W1 may be larger than the larger width of the second width W2 and the third width W3.

Referring to Fig. 4, a cross-sectional view along a line A - A of Fig. 3 is illustrated. The four orifices 192, 194, 196, and 198 of the first group of orifices 190 may be alternately arranged with respect to the four orifices 292, 294, 296, and 298 of the second group of orifices 290. For example, when providing the first group of orifices 190 with four orifices 192, 194, 196, and 198 and the second group of orifices 290 also with four orifices 292, 294, 296, and 298, the central regions of the outlets of each orifice may be disposed with an angle of about 45° to each other (see Fig. 4).

It should be noted that the orifices 292, 294, 296, and 298 of the second group of orifices 290, as shown in Fig. 4, are not radially arranged with respect to the center axis 112. In particular, it should be noted that the orifices 292, 294, 296, and 298 of the second group of orifices 290 may extend out of the plane of projection, i.e. not perpendicular to the center axis 112. In contrary thereto, the orifices 192, 194, 196, 198 may be fully disposed in the plane of projection, i.e. the orifices 192, 194, 196, 198 may be radially arranged and, therefore, perpendicular to with respect to the center axis 112. In consideration of the above, the orifices 292, 294, 296, and 298 of the second group of orifices 290 in the plane of projection A-A shown in Fig. 4 may not extend through the entire wall structure 118.

In some embodiments, however, the first group of orifices 190 may also not extend radially with respect to the center axis 112, i.e. the first group of orifices 190 may also extend out of the plane of projection of Fig. 4.

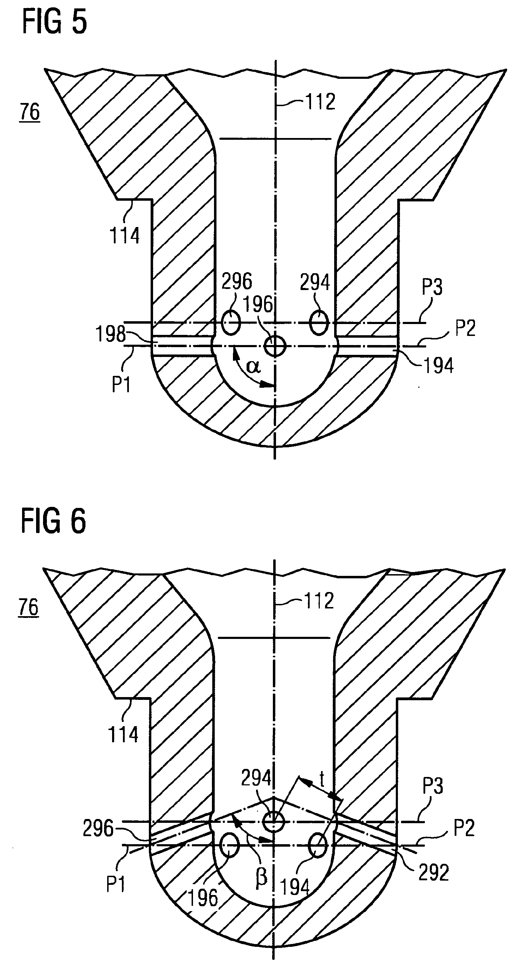

Referring to Fig. 5, a cross-sectional view along a line B - B of Fig. 4 is depicted. As shown in Fig. 5, the orifices 194 and 198 being in the plane of projection B - B may extend radially through the wall structure 118 with a first angle α with respect to the center axis 112. In the illustrated embodiment, as the first group of orifices 190 is radially arranged with respect to the center axis 112, the first angle α may be about 90°. However, as already mentioned, one skilled in the art may recognize that the angle α may also be different to 90°, for example, in the range from about 35° to 120°.

As further shown in Fig. 5, the orifice 196 of the first group of orifices 190 may extend into the plane of projection B - B with the first angle α, and the orifice 198 may not be visible in Fig. 5, as the orifice 198 may extend out of the plane of projection B - B. As also depicted in Fig. 5, the orifices 294 and 296 of the second group of orifices 290 may also extend into the plane of projection B - B of Fig. 5.

With respect to Figs. 3 to 6, it may be derived that the inlets of the orifices 192, 194, 196, and 198 of the first group of orifices 190 may be disposed at the inside of the wall structure 118 at a second axial position P2 with respect to the center axis 112. In the embodiment shown in Figs. 3 to 6, the second position P2 may be identical to the first axial position P1, as the angle α may be about 90°. However, in the case of an angle α being unequal to about 90°, the second axial position P2 may not be identical to the first axial position P1. Preferably, the second axial position P2 may be above the first axial position P1.

The inlets of the orifices 292, 294, 296, and 298 of the second group of orifices 290 may be disposed at the inside of the wall structure 118 at a third axial position P3 with respect to the center axis 112. The third axial position P3 may not be identical to the second axial position P2 and the first axial position, i.e. the inlets of the first group of orifices 190 may be arranged at another level as the inlets of the second group of orifices 290, as can be best seen in Figs. 5 and 6.

Referring to Fig. 6 illustrating a sectional view along line C - C of Fig. 4, the orifices 292, 294, 296, and 298 of the second group of orifices 290 may extend through the wall structure 118 with a second angle β with respect to the center axis 112. The second angle β may be different to the first angle α.

As illustrated in the depicted embodiment, the second angle β may be about 70°. In some embodiments, the second angle β may be in a range from about 30° to 100°. In yet some embodiments, the second angle β may be smaller than the first angle α.

In some embodiments, the second angle β may be dependent on the first angle α and a diameter of the plurality of orifices 190, 290. For instance, the second angle β may be about 10 % to 50 % smaller than the first angle α.

As already mentioned above, the diameters of the plurality of orifices 190 and 290 as well as the first angle α and the second angle β may be chosen, such that the wall thickness between two adjacent orifices may provide sufficient material for conducting the heat of the orifices.

As shown in Figs. 3 to 6, the first and second group of orifices 190 and 290 may have a cylindrical cross-section. In some embodiments, the first and second group of orifices 190 and 290 may have a rectangular cross-section, an oval cross section, or any other cross-section well-known for orifices of pre-combustion chamber tips. In yet some embodiments, the first group of orifices 190 may have a different cross-section than the second group of orifices 290.

In the embodiment shown in Figs. 3 to 6, the outlets of the first group of orifices 190 may interlock with the outlets of the second group of orifices 290 such that an outlet of an orifice of the first group of orifices 190 is next to an outlet of an orifice of the second group of orifices 290.

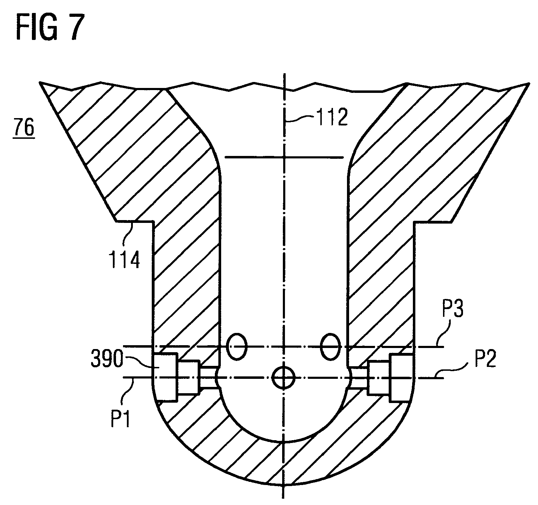

With respect to Fig. 7, at least one orifice 390 may comprise a cone-like shaped cross-section. Preferably, the cone-like shaped cross-section may be a step-like shaped cross-section comprising at least two cylindrical portions having different diameters, wherein the diameter of the inlets may be smaller than the diameter of the outlets. As depicted in Fig. 7, the step-like shaped cross-section may comprise three cylindrical portions. However, in some embodiments, the step-like shaped cross-section may comprise more than three cylindrical portions.

The at least one orifice 390 may also extend through the dome-like shaped wall structure 118 with an appropriate angle with respect to the center axis 112.

### Industrial Applicability

With reference to the drawings, and in operation, the pre-combustion chamber assembly 60 may be installed in the cylinder head 24. A fuel system (not explicitly shown in the drawings) may supply a mixture of gaseous fuel and air to the pre-combustion chamber 122 via the fuel supply connection 150. A spark plug 88 mounted to the pre-combustion chamber assembly 60 may ignite the mixture of gaseous fuel and air within the pre-combustion chamber 122. After combustion of the mixture of gaseous fuel and air within the pre-combustion chamber 122, the burning fuel, for example, in the shape of torches may be emitted into the main combustion chamber 26 via the plurality of orifices 190 and 290. There, the burning fuel may initiate the main combustion process and may ignite the mixture of gaseous fuel and air within the main combustion chamber 26 supplied by the intake opening 28.

As the outlets of the plurality of orifices 190 and 290 may be arranged within the outlet band 210 at the first axial position P1, the combustion chamber tip 76 may not excessively extend into the main combustion chamber 26. Thus, the thermal stress exerted to the pre-combustion chamber tip 76 by the main combustion process may be reduced and, therefore, the lifetime of the pre-combustion chamber tip 76 may be enhanced.

Additionally, by providing a first and second group of orifices 190 and 290, the number of inlets arranged at the inside of the wall structure 118 may be increased. As a result, the effective total cross-section of the orifices may be enhanced. This may lead to a decreased velocity of the burning fuel flowing from the pre-combustion chamber 122 into the main combustion chamber 26 and, hence, to less thermal stress exerted to the pre-combustion chamber tip 76.

With respect to Fig. 7, the plurality orifices 390 may have a step-like shaped cross-section. While flowing from the pre-combustion chamber 122 into the main combustion chamber 26 via the plurality of orifices 390, the burning fuel may disengage the wall structure 118, especially at the inlets. This may decrease the cross-section of the flow of burning fuel and may result in higher velocities.

Due to the cone-like shaped cross-section of the orifices 390, the effective cross-section of the burning fuel flow may re-increase while flowing through the step-like shaped orifice 390. This may support in decreasing the velocity of the burning fuel flow and, therefore, may reduce the thermal stress to the pre-combustion chamber tip 76.

Additionally, returning to Fig. 4, the skilled person may recognize that, for example, the orifice 192 may be spaced apart from the orifice 194 by a first distance being smaller than a second distance b describing the distance between the outlets of the orifice 192 and the orifice 194. Therefore, the number of orifices extending at the same axial position from the inside of the wall structure 118 to the outside is limited. Thus, the orifices of the second group of orifices 290 may efficiently use the space at the outside of the wall structure 118 by interlocking with the orifices of the first group of orifices 190.

Furthermore, returning to Fig. 6, the inlet of, for example, the orifice 294 may be spaced apart from the inlet of the orifice 296 by a wall thickness t. The wall thickness t may provide sufficient material for conducting the heat from the orifices into the wall structure 118 of the pre-combustion chamber tip 76, which may also lead to less thermal stress to the pre-combustion chamber tip 76.

Although the preferred embodiments of this invention have been described herein, improvements and modifications may be incorporated without departing from the scope of the following claims.

## Claims

1. A pre-combustion chamber tip (76) of a pre-combustion chamber assembly (60) of an internal combustion engine (10), the pre-combustion chamber tip (76) comprising:
a dome-like shaped wall structure (118) forming at least a portion of a pre-combustion chamber (122) and having a center axis (112); and
a plurality of orifices (190, 290) extending through the wall structure (118) and comprising inlets arranged at the inside of the wall structure (118) and outlets arranged at the outside of the wall structure (118), central regions of the outlets of the plurality of orifices (190, 290) are distributed azimuthically with respect to the center axis (112) and arranged at a first axial position (P1) with respect to the center axis (112) within an outlet band (210) extending circumferentially around the dome-like shaped wall structure (118),
wherein the plurality of orifices (190, 290) comprises a first group of orifices (190) extending at a first angle (α) with respect to the center axis (112) and a second group of orifices (290) extending at a second angle (β) with respect to the center axis (112), the first angle (α) being different to the second angle (β).

2. The pre-combustion chamber tip (76) according to claim 1, wherein the outlet band (210) has a first width (W1), the outlets of the first group of orifices (190) has a second width (W2), and the outlets of the second group of orifices (290) has a third width (W3), wherein the first width (W1) is equal to the larger width of the second width (W2) and the third width (W1).

3. The pre-combustion chamber tip (76) according to any one of the preceding claims, wherein the inlets of the first group of orifices (190) are disposed at a second axial position (P2) with respect to the center axis (112), and the inlets of the second group of orifices (290) are disposed at a third axial position (P3) with respect to the center axis (112), the second axial position (P2) being unequal to the third axial position (P3).

4. The pre-combustion chamber tip (76) according to any one of the preceding claims, wherein the outlets of the first and second groups of orifices (190, 290) alternate on the outlet band (210).

5. The pre-combustion chamber tip (76) according to any one of the preceding claims, wherein the inlets of the first group of orifices (190) are arranged at a second axial position (P2) and the inlets of the second group of orifices (290) are arranged at a third axial position (P3), the second axial position (P2) being different to the third axial position (P3).

6. The pre-combustion chamber tip (77) according to any one of the preceding claims, wherein at least one orifice of the plurality of orifices (190, 290) has a step-like shaped cross-section along the thickness of the wall structure (118) and the diameter of the inlet is smaller than the diameter of the outlets.

7. The pre-combustion chamber tip (76) according to any one the preceding claims, wherein the first angle (α) is in the range from about 35 to 120°, and/or the second angle (β) is about 10 % to 50 % smaller than the first angle (α).

8. The pre-combustion chamber tip (76) according to any one of the preceding claims, wherein the dome-like shaped wall structure (118) comprises a first portion (106) and a second portion (108) connected to the first portion (108) by a connecting portion (110), the first portion (106) being cylindrical and the second portion (108) being a generally cylindrical spherical dome closing the pre-combustion chamber tip (76) at the second portion (108),
wherein the outlet band (210) is circumferentially arranged at the connecting portion (108).

9. The pre-combustion chamber tip (76) according to any one of the preceding claims, wherein the first group of orifices (190) and the second group of orifices (290) are arranged such that a wall thickness (t) of the wall structure (118) is sufficient for diverting the heat from the first and second group of orifices (190, 290).

10. A pre-combustion chamber lower part (74) for attaching to a pre-combustion chamber upper part (70) of an internal combustion engine (10), the pre-combustion chamber lower part (74) comprising:
a spark plug mounting section (78) for mounting at least one spark plug (88); and
a pre-combustion chamber tip (76) according to any one of the preceding claims attached to the spark plug mounting section (78).

11. The pre-combustion chamber lower part (74) according to claim 10, wherein the spark plug mounting section (78) comprises a fuel supply connection (150) interconnecting the pre-combustion chamber (122) with a fuel system of the internal combustion engine (10), the fuel supply connection (150) being configured to supply a mixture of fuel and air to the pre-combustion chamber (122).

12. An internal combustion engine (10) comprising:
a main combustion chamber (26);
a cylinder head (24) configured to form at least a portion of the main combustion chamber (26); and
a pre-combustion chamber assembly (60) for attaching to the cylinder head (24) and comprising a pre-combustion chamber upper part (70) and a pre-combustion chamber lower part (74) according to any one of claims 10 and 11, wherein the pre-combustion chamber tip (76) at least partially extends into the main combustion chamber (26) and the pre-combustion chamber (122) is in fluid communication with the main combustion chamber (26) via the plurality of orifices (190, 290).

13. A method for operating a pre-combustion chamber tip (76) according to any one of claims 1 to 9, the method comprising:
supplying a mixture of fuel and air to the pre-combustion chamber (122);
igniting the fuel within the pre-combustion chamber (122); and
emitting the ignited fuel into the main combustion chamber (26) via the first and second groups of orifices (190, 290).

14. The method according to claim 13, wherein igniting the fuel within the pre-combustion chamber (122) is performed by a spark plug (88) extending at least partially into the pre-combustion chamber (122) of the pre-combustion chamber tip (76).

15. The method according to any one of claims 13 and 14, wherein the fuel supplied to the pre-combustion chamber (122) is gaseous fuel.

## Patentansprüche

1. Vorkammerspitze (76) eines Vorkammeraufbaus (60) einer Brennkraftmaschine (10), wobei die Vorkammerspitze (76) umfasst:
einen kuppelartig geformten Wandaufbau (118), der mindestens einen Teil einer Vorkammer (122) bildet und eine Mittelachse (112) aufweist, und
mehrere Öffnungen (190, 290), die sich durch den Wandaufbau (118) erstrecken und an der Innenseite des Wandaufbaus (118) angeordnete Einlässe und an der Außenseite des Wandaufbaus (118) angeordnete Auslässe aufweisen, wobei mittlere Bereiche der Auslässe der Öffnungen (190, 92) in Umfangsrichtung um die Mittelachse (112) verteilt und bei einer ersten Axialposition (P1) der Mittelachse (112) innerhalb eines sich in Umfangsrichtung um den kuppelartig geformten Wandaufbau (118) erstreckenden Auslassbereichs (210) angeordnet sind,
die Öffnungen (190, 290) eine erste Gruppe von Öffnungen (190), die sich unter einem ersten Winkel (α) bezüglich der Mittelachse (112) erstrecken, und eine zweite Gruppe von Öffnungen (290), die sich unter einem zweiten Winkel (β) bezüglich der Mittelachse (112) erstrecken, aufweisen und sich der erste Winkel (α) vom zweiten Winkel (β) unterscheidet.

2. Vorkammerspitze (76) nach Anspruch 1, wobei der Auslassbereich (210) eine erste Breite (W1), die Auslässe der ersten Gruppe von Öffnungen (190) eine zweite Breite (W2) und die Auslässe der zweiten Gruppe von Öffnungen (290) eine dritte Breite (W3) aufweisen und die erste Breite (W1) der größeren Breite von der zweiten Breite (W2) und der dritten Breite (W1) entspricht.

3. Vorkammerspitze (76) nach einem der voranstehenden Ansprüche, wobei die Einlässe der ersten Gruppe von Öffnungen (190) bei einer zweiten Axialposition (P2) der Mittelachse (112) angeordnet sind, die Einlässe der zweiten Gruppe von Öffnungen (290) bei einer dritten Axialposition (P3) der Mittelachse (112) angeordnet sind und die zweite Axialposition (P2) ungleich der dritten Axialposition (P3) ist.

4. Vorkammerspitze (76) nach einem der voranstehenden Ansprüche, wobei die Auslässe der ersten und zweiten Gruppe von Öffnungen (190, 290) am Auslassbereich (210) alternieren.

5. Vorkammerspitze (76) nach einem der voranstehenden Ansprüche, wobei die Einlässe der ersten Gruppe von Öffnungen (190) bei einer zweiten Axialposition (P2) angeordnet sind, die Einlässe der zweiten Gruppe von Öffnungen (290) bei einer dritten Axialposition (P3) angeordnet sind und sich die zweite Axialposition (P2) von der dritten Axialposition (P3) unterscheidet.

6. Vorkammerspitze (77) nach einem der voranstehenden Ansprüche, wobei mindestens eine der mehreren Öffnungen (190, 290) einen stufenförmigen Querschnitt entlang der Dicke des Wandaufbaus (118) aufweist und der Durchmesser des Einlasses kleiner als der Durchmesser des Auslasses ist.

7. Vorkammerspitze (76) nach einem der voranstehenden Ansprüche, wobei der erste Winkel (α) in einem Bereich von ungefähr 35 bis 120° liegt und/oder der zweite Winkel (β) ungefähr 10% bis 50% kleiner als der erste Winkel (α) ist.

8. Vorkammerspitze (76) nach einem der voranstehenden Ansprüche, wobei der kuppelartig geformte Wandaufbau (118) einen ersten Abschnitt (106) und einen mit dem ersten Abschnitt (108) über einen Verbindungsabschnitt (110) verbundenen zweiten Abschnitt (108) aufweist, der erste Abschnitt (106) zylindrisch ist, der zweite Abschnitt (108) eine im Wesentlichen zylindrische Kugelkuppel ist, die die Vorkammerspitze (76) beim zweiten Abschnitt (108) verschließt, und
der Auslassbereich (210) in Umfangsrichtung bei dem Verbindungsabschnitt (108) angeordnet ist.

9. Vorkammerspitze (76) nach einem der voranstehenden Ansprüche, wobei die erste Gruppe von Öffnungen (190) und die zweite Gruppe von Öffnungen (290) derart angeordnet sind, dass eine Wanddicke (t) des Wandaufbaus (118) ausreichend groß ist, um die Wärme von der ersten und zweiten Gruppe von Öffnungen (190, 290) wegzuleiten.

10. Vorkammerunterteil (74) zum Anbringen an ein Vorkammeroberteil (70) einer Brennkraftmaschine (10), wobei das Vorkammerunterteil (74) folgende Komponenten umfasst:
einen Zündkerzenbefestigungsabschnitt (78) zum Befestigen von mindestens einer Zündkerze (88), und
eine Vorkammerspitze (76) nach einem der voranstehenden Ansprüche, die an dem Zündkerzenbefestigungsabschnitt (78) angebracht ist.

11. Vorkammerunterteil (74) nach Anspruch 10, wobei der Zündkerzenbefestigungsabschnitt (78) eine Kraftstoffzufuhrverbindung (150) aufweist, die die Vorkammer (122) mit einem Kraftstoffsystem der Brennkraftmaschine (10) verbindet, und die Kraftstoffzufuhrverbindung (150) dazu ausgebildet ist, die Vorkammer (122) mit einer Kraftstoff-Luft-Mischung zur versorgen.

12. Brennkraftmaschine (10) mit:
einer Hauptbrennkammer (26),
einem Zylinderkopf (24), der dazu ausgebildet ist, zumindest einen Teil der Hauptbrennkammer (26) zu bilden, und
einem Vorkammeraufbau (60), der zum Anbringen des Zylinderkopfs (24) ausgebildet ist und ein Vorkammeroberteil (70) und ein Vorkammerunterteil (74) nach einem der Ansprüche 10 und 11 aufweist, wobei sich die Vorkammerspitze (76) zumindest teilweise in die Hauptbrennkammer (26) erstreckt und die Vorkammer (122) über die mehreren Öffnungen (190, 290) mit der Hauptbrennkammer (26) in Fluidverbindung steht.

13. Verfahren zum Betreiben einer Vorkammerspitze (76) nach einem der Ansprüche 1 bis 9, mit:
Versorgen der Vorkammer (122) mit einer Kraftstoff-Luft-Mischung,
Entzünden des Kraftstoffs im Inneren der Vorkammer (122), und
Einleiten des entzündeten Kraftstoffs in die Hauptbrennkammer (26) über die erste und zweite Gruppe von Öffnungen (190, 290).

14. Verfahren nach Anspruch 13, wobei ein Entzünden des Kraftstoffs im Inneren der Vorkammer (122) durch eine Zündkerze (88), die sich zumindest teilweise in die Vorkammer (122) der Vorkammerspitze (76) erstreckt, erfolgt.

15. Verfahren nach einem der Ansprüche 13 und 14, wobei der der Vorkammer (122) zur Verfügung gestellte Kraftstoff ein gasförmiger Kraftstoff ist.

## Revendications

1. Extrémité (76) de chambre de pré-combustion d'un ensemble (60) de chambre de pré-combustion d'un moteur à combustion interne (10), l'extrémité (76) de chambre de pré-combustion comprenant :
une structure de paroi (118) en forme de dôme formant au moins une portion d'une chambre de pré-combustion (122) et ayant un axe central (112) ; et
une pluralité d'orifices (190, 290) s'étendant au travers de la structure de paroi (118) et comprenant des entrées disposées à l'intérieur de la structure de paroi (118) et des sorties disposées à l'extérieur de la structure de paroi (118), des régions centrales des sorties de la pluralité d'orifices (190, 290) étant réparties de façon azimuthale par rapport à l'axe central (112) et disposées en une première position axiale (P1) par rapport à l'axe central (112) dans une bande de sortie (210) s'étendant de façon circonférentielle autour de la structure de paroi (118) en forme de dôme,
dans laquelle la pluralité d'orifices (190, 290) comprend un premier groupe d'orifices (190) s'étendant selon un premier angle (α) par rapport à l'axe central (112) et un second groupe d'orifices (290) s'étendant selon un second angle (β) par rapport à l'axe central (112), le premier angle (α) étant différent du second angle (β).

2. L'extrémité de chambre de pré-combustion (76) selon la revendication 1, dans laquelle la bande de sortie (210) a une première largeur (W1), les sorties du premier groupe d'orifices (190) ont une seconde largeur (W2) et les sorties du second groupe d'orifices (290) ont une troisième largeur (W3), dans laquelle la première largeur (W1) est égale à la plus grande de la seconde largeur (W2) et de la troisième largeur (W1).

3. Extrémité (76) de chambre de pré-combustion selon l'une quelconque des revendications précédentes, dans laquelle les entrées du premier groupe d'orifices (190) sont disposées selon une seconde position axiale (P2) par rapport à l'axe central (112) et les entrées du second groupe d'orifices (290) sont disposées selon une troisième position axiale (P3) par rapport à l'axe central (112), la seconde position axiale (P2) étant différente de la troisième position axiale (P3).

4. Extrémité (76) de chambre de pré-combustion selon l'une quelconque des revendications précédentes, dans laquelle les sorties du premier et du second groupes d'orifices (190, 290) alternent sur la bande de sortie (210).

5. Extrémité (76) de chambre de pré-combustion selon l'une quelconque des revendications précédentes, dans laquelle les entrées du premier groupe d'orifices (190) sont disposées selon une seconde position axiale (P2) et les entrées du second groupe d'orifices (290) sont disposées selon une troisième position axiale (P3), la seconde position axiale (P2) étant différente de la troisième position axiale (P3).

6. Extrémité (77) de chambre de pré-combustion selon l'une quelconque des revendications précédentes, dans laquelle au moins un orifice de la pluralité d'orifices (190, 290) a une section transversale en forme d'échelon le long de l'épaisseur de la structure de paroi (118) et le diamètre de l'entrée est plus petit que le diamètre des sorties.

7. Extrémité (76) de chambre de pré-combustion selon l'une quelconque des revendications précédentes, dans laquelle le premier angle (α) est dans la plage de 35 à 120°, et/ou le second angle (β) est environ 10% à 50% plus petit que le premier angle (α).

8. Extrémité (76) de chambre de pré-combustion selon l'une quelconque des revendications précédentes, dans laquelle la structure de paroi (118) en forme de dôme comprend une première portion (108) et une seconde portion (108) connectée à la première portion (106) par une portion de connexion (110), la première portion (106) étant cylindrique et la seconde portion (108) étant un dôme sphérique généralement cylindrique fermant l'extrémité (76) de la chambre de pré-combustion au niveau de la seconde portion (108),
dans laquelle la bande de sortie (210) est disposée de façon circonférentielle sur la portion de connexion (108).

9. Extrémité (76) de chambre de pré-combustion selon l'une quelconque des revendications précédentes, dans laquelle le premier groupe d'orifices (190) et le second groupe d'orifices (290) sont disposés de telle façon qu'une épaisseur de paroi (t) de la structure de paroi (118) est suffisante pour détourner la chaleur du premier et du second groupes d'orifices (190, 290).

10. Partie inférieure (74) de la chambre de pré-combustion pour la fixation à une partie supérieure (70) de la chambre de pré-combustion d'un moteur à combustion interne (10), la partie inférieure (74) de la chambre de pré-combustion comprenant :
une section de montage (78) de bougie d'allumage pour monter au moins une bougie d'allumage (88) ; et
une extrémité (76) de chambre de pré-combustion selon l'une quelconque des revendications précédentes fixée à la section de montage (78) de la bougie d'allumage.

11. Partie inférieure (74) de la chambre de pré-combustion selon la revendication 10, dans laquelle la section de montage (78) de la bougie d'allumage comprend un raccord d'alimentation en carburant (150) interconnectant la chambre de pré-combustion (122) avec un circuit de carburant du moteur à combustion interne (10), la connexion du système de carburant (150) étant configurée pour acheminer un mélange carburant et air dans la chambre de pré-combustion (122).

12. Moteur à combustion interne (10) comprenant :
une chambre principale de combustion interne (26) ;
une culasse (24) configurée pour former au moins une portion de la chambre principale de combustion (26) ; et
un ensemble de chambre de pré-combustion (60) pour fixation à la culasse (24) et comprenant une partie supérieure (70) de la chambre de pré-combustion et une partie inférieure (74) de la chambre de pré-combustion selon l'une quelconque des revendications 10 et 11, dans laquelle l'extrémité (76) de la chambre de pré-combustion s'étend au moins partiellement dans la chambre principale de combustion (26) et la chambre de pré-combustion (122) est en communication de fluide avec la chambre principale de combustion (26) via la pluralité d'orifices (190, 290).

13. Procédé pour opérer une extrémité (76) de chambre de pré-combustion selon l'une quelconque des revendications 1 à 9, la méthode comprenant :
l'acheminement d'un mélange carburant et air dans la chambre de pré-combustion (122) ;
l'allumage du carburant dans la chambre de pré-combustion (122) ; et
l'injection du carburant allumé dans la chambre principale de combustion (26) via le premier et le second groupes d'orifices (190, 290).

14. Procédé selon la revendication 13, dans lequel l'allumage du carburant dans la chambre de pré-combustion (122) est effectué par une bougie d'allumage (88) s'étendant au moins partiellement dans la chambre de pré-combustion (122) de l'extrémité (76) de la chambre de pré-combustion.

15. Procédé selon l'une quelconque des revendications 13 et 14, dans lequel le carburant envoyé dans la chambre de pré-combustion (122) est un carburant gazeux.
